# DEMANDE DE BREVET EUROPEEN

(11) **EP 1 605 325 A2**
(43) Date de publication de la demande: **14.12.2005**
(21) Numéro de dépôt: 05300460.2
(22) Date de dépôt: 07.06.2005
(51) Int. Cl.: G05B 19/042

(54) **Dispositif de transfert de données pour la mise à jour de la programmation d'un système de contrôle d'une machine tournante électrique**

(30) Priorité: 10.06.2004 FR 0406296
(71) Demandeur: MOTEURS LEROY-SOMER, 16015 Angouleme Cédex (FR)
(72) Inventeur: Giraud, Régis, 16000 Angoulême (FR); Crespo, Thierry, 16400 Voeuil et Giget (FR); Petillon, Jean-Marc, 16730 Fléac (FR)
(74) Mandataire: Tanty, François

(57) **Abrégé**

La présente invention concerne un dispositif de mise à jour de la programmation d'un système de contrôle d'une machine électrique tournante, notamment un variateur de vitesse ou un démarreur, ce dispositif étant dépourvu d'écran et comportant :
- un élément de connexion (13, 14) électrique ou optique au système de contrôle, permettant le transfert de données entre le dispositif (10) et le système de contrôle,
- une mémoire (14) pour contenir des données à transférer dans le système de contrôle et/ou à charger depuis le système de contrôle,
- un organe de commande (20),
l'échange de données entre le dispositif et le système de contrôle s'effectuant en réponse à une action exercée manuellement sur l'organe de commande.

## Description

La présente invention concerne un dispositif de transfert de données pouvant être utilisé notamment pour mettre à jour la programmation d'un système de contrôle d'une machine électrique tournante, par exemple un moteur électrique.

Certains systèmes de contrôle comportent une mémoire dans laquelle sont chargées les valeurs des paramètres de fonctionnement de la machine, lesquelles peuvent être nombreuses et régissent par exemple les plages d'accélération et de décélération de la machine, ainsi que certaines informations nécessaires à un contrôle efficace de la machine, par exemple certaines caractéristiques de la machine, notamment ses tension, puissance et vitesse nominales.

Lorsque ces valeurs doivent être modifiées, une première solution consiste à relier le système de contrôle à un ordinateur portable par un câble et à utiliser un logiciel tournant sur l'ordinateur pour mettre à jour le système de contrôle. Une telle démarche nécessite l'intervention d'un opérateur spécialisé, ce qui se répercute sur le coût de fonctionnement de la machine.

Une autre solution, assez similaire à la précédente, consiste à utiliser non pas un ordinateur mais une console spécifique comportant un écran à cristaux liquides ou des afficheurs à au moins sept segments et un clavier permettant d'entrer et/ou de modifier des valeurs affichées à l'écran. Outre le coût impliqué par l'acquisition de la console, une personne doit être formée à son utilisation, ce qui peut ne pas se justifier économiquement pour un système de contrôle unique, par exemple.

Il a été proposé par ailleurs d'utiliser une carte mémoire contenant les nouvelles valeurs des paramètres de fonctionnement, cette carte mémoire pouvant être connectée au système de contrôle afm d'effectuer le transfert de données. Le système de contrôle est équipé d'un clavier et d'un écran qui permettent à l'utilisateur d'effectuer les opérations nécessaires à la lecture de la carte mémoire. Cette solution ne convient pas à un système de contrôle dépourvu de clavier et d'écran permettant d'afficher des caractères alphanumériques. Or, un tel système de contrôle se rencontre fréquemment, notamment en raison de sont coût moindre et de sa fiabilité accrue en milieu difficile.

Il existe par conséquent un besoin pour faciliter la mise à jour de la programmation des systèmes de contrôle sans avoir à les munir d'un clavier ou d'un écran et sans pour autant également que cette mise à jour puisse générer un risque accru d'erreur, lié par exemple au chargement accidentel de données destinées à un système de contrôle différent.

L'invention vise notamment à répondre à ce besoin.

L'invention a pour objet, selon l'un de ses aspects parmi d'autres, un dispositif de mise à jour de la programmation d'un système de contrôle d'une machine électrique tournante, ce dispositif étant dépourvu d'écran, notamment d'écran à cristaux liquides ou à afficheurs à au moins sept segments à diodes électroluminescentes, et comportant :
- un élément de connexion électrique ou optique au système de contrôle, permettant le transfert de données entre le dispositif et le système de contrôle,
- une mémoire pour contenir des données à transférer dans le système de contrôle et/ou à charger depuis le système de contrôle,
- un organe de commande, l'échange de données entre le dispositif et le système de contrôle s'effectuant en réponse à une action exercée manuellement sur l'organe de commande.

Grâce à l'invention, le risque d'un transfert accidentel de données peut être réduit car le simple raccordement du dispositif au système de contrôle est insuffisant pour provoquer le transfert des données et la mise à jour de la programmation du système de contrôle. Une action volontaire de la part de l'utilisateur est nécessaire.

De plus, l'utilisateur peut commander le transfert des données sans que le système de contrôle n'ait nécessairement à être équipé d'un clavier et d'un écran.

En outre, l'organe de commande peut être limité à une simple touche, ce qui rend le dispositif de transfert de données relativement peu coûteux, fiable et susceptible d'une large commercialisation. Cette touche peut comporter un bouton-poussoir.

Le dispositif peut avantageusement comporter, en outre, une diode électroluminescente et celle-ci peut s'illuminer en fonction de l'état d'accomplissement du transfert de données. La diode électroluminescente peut par exemple clignoter pendant le transfert et s'illuminer de manière continue après le transfert.

L'action à exercer manuellement sur l'organe de commande pour provoquer le transfert peut comporter au moins deux pressions successives sur la touche unique, avec un intervalle de temps prédéfini entre elles, par exemple compris entre 0,5 et 10 s. Ainsi, la deuxième pression doit être exercée relativement rapidement, ce qui permet à un opérateur qui aurait appuyé une première fois par erreur d'éviter l'opération de transfert en s'abstenant d'appuyer une seconde fois avant la fin dudit intervalle de temps.

Le dispositif peut être agencé pour transférer des données vers le système de contrôle. Ces données peuvent être relatives à des paramètres de fonctionnement de la machine et/ou à des caractéristiques de la machine, le dispositif étant par exemple un variateur de vitesse ou un démarreur.

L'élément de connexion peut comporter un connecteur électrique, par exemple un connecteur de référence commerciale RJ 45. Le connecteur peut comporter cinq broches utiles, ce qui laisse d'autres broches disponibles sur le système de contrôle pour un raccordement à un dispositif autre, par exemple une console avec écran ou un ordinateur.

Le dispositif peut comporter un câble souple entre le connecteur et le boîtier.

La mémoire du dispositif peut être intégrée dans un circuit EEPROM. La mémoire peut notamment présenter une capacité supérieure ou égale à 8 MOctets, voire supérieure ou égale à 16 MOctets.

Le boîtier du dispositif peut être ouvert sur une face, ce qui facilite sa fabrication et diminue son prix de revient. Le boîtier peut comporter un plot venu de moulage, sur lequel est engagé un circuit imprimé.

L'invention a encore pour objet, selon un autre de ses aspects, un ensemble comportant un dispositif et un système de contrôle tels que défmis plus haut.

Les données contenues dans la mémoire du dispositif peuvent comporter un code d'identification spécifique à une catégorie prédéfinie de machine tournante et/ou de système de contrôle et le système de contrôle peut être agencé pour empêcher le transfert des données si le code n'est pas reconnu. Cela permet d'éviter que des valeurs liées au fonctionnement d'un variateur d'un gabarit donné, par exemple, soient accidentellement programmées dans un variateur d'un gabarit différent.

Le système de contrôle peut être agencé pour modifier des données contenues dans la mémoire du dispositif après l'opération de transfert des données.

Après le transfert des données, des données liées au fonctionnement de la machine, notamment son fonctionnement passé, peuvent être chargées dans le dispositif. Ces données liées au fonctionnement peuvent avantageusement comporter au moins une information utile à la maintenance.

Le système de contrôle peut être agencé pour lire un état de l'organe de commande. Cela simplifie la fabrication du dispositif.

Le dispositif peut être dépourvu d'alimentation électrique propre et le système de contrôle peut être agencé pour alimenter électriquement le dispositif Ainsi, il n'y a pas à prévoir de pile ou d'accumulateur dans le dispositif

Dans un exemple de mise en oeuvre de l'invention, le dispositif est agencé pour communiquer avec le système de contrôle selon le protocole I²C.

Le système de contrôle peut comporter un connecteur pour recevoir l'élément de connexion du dispositif Ce connecteur est avantageusement accessible sans démontage d'un capot de protection.

Le connecteur peut comporter des broches permettant un échange de données avec un ordinateur ou une console selon un protocole différent de celui appliqué à l'échange de données entre le dispositif et le système de contrôle.

Le système de contrôle peut être solidaire de la machine électrique qui lui est associée, étant par exemple fixé sur le carter de celle-ci.

Le système de contrôle peut être agencé pour agir sur la vitesse de rotation d'un moteur électrique, au moins lors de la phase de démarrage.

L'invention a encore pour objet, selon un autre de ses aspects, une gamme de systèmes de contrôle de machines électriques tournantes comportant des systèmes de contrôle, de fabrication sensiblement identique, et un ensemble de dispositifs de transfert de données tels que définis plus haut, associés à ces systèmes de contrôle et contenant des données de fonctionnement différentes. Les dispositifs de transfert de données permettent de programmer aisément les systèmes de contrôle avec des données spécifiques. Cela peut permettre par exemple de différencier les systèmes de contrôle afm d'agrandir l'offre commerciale.

L'invention a encore pour objet, selon un autre de ses aspects, un procédé industriel dans lequel des machines électriques tournantes sont contrôlées par des systèmes de contrôle respectifs, procédé dans lequel les paramètres de fonctionnement sont d'abord déterminés avec l'une des machines et chargés ensuite dans un dispositif selon l'invention avant d'être transférées vers au moins un autre système de contrôle associé à une autre machine.

Ainsi, il est facile de dupliquer la programmation d'un système de contrôle, jugée optimale, et associée par exemple à une ligne de fabrication, aux autres systèmes de contrôle équipant des lignes de fabrication identiques ou similaires, sans avoir à effectuer des manipulations complexes avec les risques d'erreurs attachés.

L'invention a encore pour objet, selon un autre des ses aspects, un procédé de mise à jour d'au moins un paramètre de fonctionnement d'un système de contrôle d'au moins une machine tournante électrique, dans lequel des données liées à ce paramètre sont chargées dans la mémoire d'un dispositif selon l'invention puis transférées dans le système de contrôle.

Les données chargées dans la mémoire du dispositif selon l'invention peuvent être chargées de multiples façons et par exemple téléchargées depuis un site Internet.

Le chargement peut s'effectuer par l'intermédiaire d'une interface permettant la réception de données selon un premier protocole et leur transfert vers le dispositif selon un second protocole, ce second protocole étant par exemple le protocole I²C.

Les données peuvent être chargées après sélection d'une catégorie de système de contrôle parmi plusieurs et les données chargées comportent avantageusement un code d'identification spécifique à chaque catégorie de système de contrôle. Le système de contrôle peut être agencé pour vérifier, avant d'accepter une modification de la programmation existante, que le dispositif de transfert de données est bien porteur du code d'identification correspondant.

L'invention pourra être mieux comprise à la lecture de la description détaillée qui va suivre, d'un exemple non limitatif de mise en oeuvre de celle-ci, et à l'examen du dessin annexé, sur lequel :
- la figure 1 est une vue en élévation d'une machine tournante électrique équipée de son système de contrôle,
- la figure 2 représente isolément, en vue de dessous, le système de contrôle de la figure 1, désolidarisé de la machine tournante,
- la figure 3 représente isolément le dispositif de transfert de données,
- la figure 4 est une coupe longitudinale partielle du dispositif de la figure 3,
- la figure 5 est un schéma électrique du dispositif de transfert de données,
- la figure 6 est un schéma en blocs d'un ensemble formé par le système de contrôle et le dispositif de transfert de données,
- la figure 7 est un schéma en blocs illustrant un exemple de mise en oeuvre du dispositif de transfert de données,
- la figure 8 illustre le téléchargement de données dans au moins un dispositif de transfert de données depuis un site Internet, et
- la figure 9 est un schéma en blocs illustrant un autre exemple de mise en oeuvre du dispositif de transfert de données.

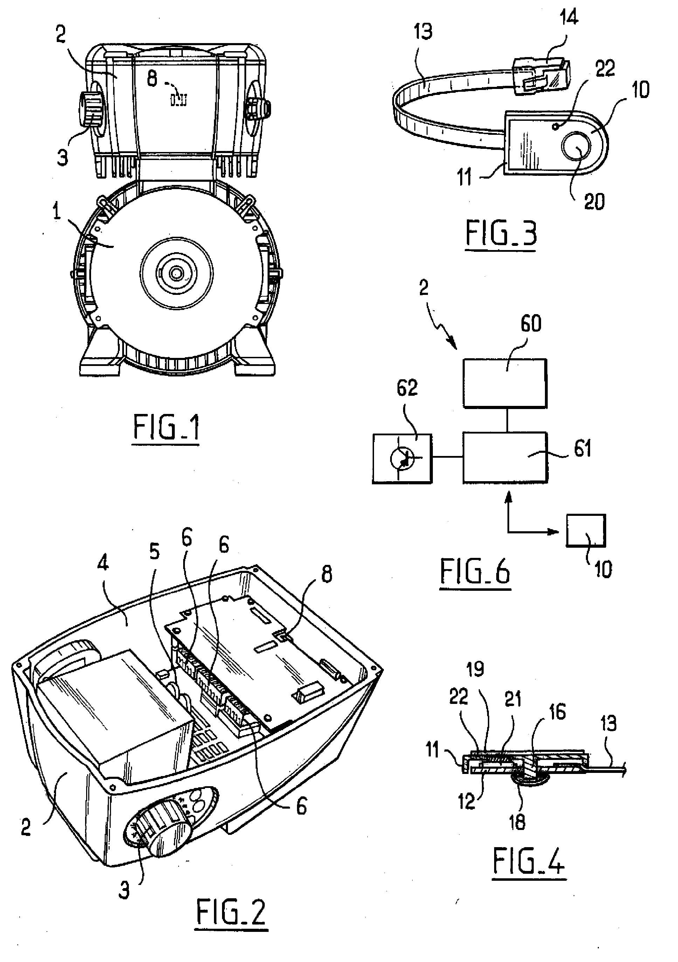

On a représenté à la figure 1 une machine tournante électrique 1, telle que par exemple un moteur électrique, dont le fonctionnement est commandé par un système de contrôle 2.

Ce système de contrôle 2 est par exemple un variateur permettant de modifier la vitesse du moteur, mais on ne sort pas du cadre de la présente invention lorsque le système de contrôle 2 est par exemple un démarreur ou tout autre organe de contrôle, de protection ou de surveillance.

Dans l'exemple considéré, le système de contrôle 2 comporte un bouton rotatif 3, directement accessible à l'utilisateur, et que celui-ci peut manoeuvrer pour par exemple sélectionner une vitesse de rotation particulière. Toujours dans l'exemple illustré, le système de contrôle est dépourvu d'écran, notamment d'écran à cristaux liquides ou à afficheurs à au moins sept segments, et de clavier, notamment de clavier comportant au moins cinq touches de navigation dans un menu.

Si l'on se réfère maintenant à la figure 2, on voit que le boîtier 4 du système de contrôle loge un ensemble de cartes électroniques comportant des borniers 6 permettant le raccordement du système de contrôle 2 à des composants extérieurs.

Le système de contrôle 2 comporte également un connecteur 8, en l'espèce un connecteur femelle de référence commerciale RJ 45, destiné à être relié à un dispositif de transfert de données 10 représenté isolément à la figure 3, par l'intermédiaire le cas échéant d'une rallonge adaptée.

Le dispositif de transfert de données 10 comporte dans l'exemple considéré un boîtier 11 logeant un circuit imprimé 12 portant les composants électroniques et relié par un câble 13 à un connecteur 14 qui est dans l'exemple considéré une fiche mâle, de référence commerciale RJ 45.

Le boîtier 11 est ouvert d'un côté, comme on peut le voir à la figure 4, et comporte un plot 16 sur lequel est engagé le circuit imprimé 12, une rondelle d'arrêt 18 étant fixée sur le plot 16 pour retenir le circuit imprimé 12 dans le boîtier 11.

Dans l'exemple considéré, le boîtier 11 est également recouvert par un film souple 19. Le circuit imprimé 12 comporte un bouton-poussoir 21 s'étendant à travers une ouverture 22 du boîtier 11, que l'utilisateur peut actionner en appuyant sur une touche 20 formée sur le film 19.

Le circuit imprimé 12 porte un voyant lumineux 22 constitué par une diode électroluminescente et le film 19 présente en regard de ce voyant 22 une région transparente permettant d'en percevoir la lumière, à travers un ajour du boîtier 11.

Si l'on se reporte à la figure 5, on peut voir que le dispositif 10 comporte un circuit intégré 24 de type EEPROM connu en lui-même, par exemple de référence commerciale 24C16, alimenté en + 5 volts grâce à un régulateur 25 et comportant une mémoire pouvant échanger des données avec le système de contrôle 2 par une ligne à deux fils 25 et 26 reliés respectivement aux sorties SCL et SDA du circuit 24.

La diode électroluminescente 22 est alimentée par un transistor 28 commandé par la ligne 26.

Deux broches du connecteur 14 sont reliées respectivement aux lignes 25 et 26, et les trois autres broches sont reliées respectivement au 0 volt, à l'entrée du régulateur de tension 25 et au bouton-poussoir 21, ce dernier étant connecté en série avec une résistance 29 au 0 volt.

Ainsi, dans l'exemple considéré, c'est le système de contrôle 2 qui est agencé pour alimenter électriquement le circuit intégré, la diode électroluminescente 22 et détecter l'état passant ou non du bouton-poussoir 21.

Le circuit 24 peut mémoriser des données correspondant à des paramètres de fonctionnement du système de contrôle 2. Il peut s'agir de valeurs de paramètres permettant de commander une plage d'accélération ou de décélération de la machine tournante 1, et de valeurs renseignant sur les caractéristiques de la machine, par exemple ses tension, puissance et vitesse nominales.

Le système de contrôle 2 comporte au moins une mémoire 60 représentée de manière très schématique à la figure 6, dans laquelle les données régissant le fonctionnement de la machine électrique tournante 1 sont programmées, et cette mémoire 60 peut être mise à jour par le dispositif de transfert de données 10.

Le système de contrôle 2 comporte en outre au moins un organe de contrôle 67 tel qu'au moins un microcontrôleur ou microprocesseur et les composants périphériques associés pour gérer le fonctionnement de la machine électrique tournante 1 et notamment générer les signaux de commande de l'électronique de puissance 62 alimentant la machine tournante 1 et traiter l'information provenant des capteurs ou autres composants associés.

Le système de contrôle 2 est agencé pour permettre la mise à jour de la programmation de sa mémoire 60 par le dispositif de transfert de données 10, lorsqu'une action spécifique est exercée sur la touche 20, par exemple deux pressions successives.

Dans l'exemple considéré, le système de contrôle est agencé pour vérifier que les deux pressions successives sont exécutées dans un intervalle de temps prédéfini, par exemple compris entre 0,5 s et 10 s. Ainsi, deux pressions exercées successivement avec un laps de temps de plus de 10 s entre les deux ne provoqueront pas le transfert de données.

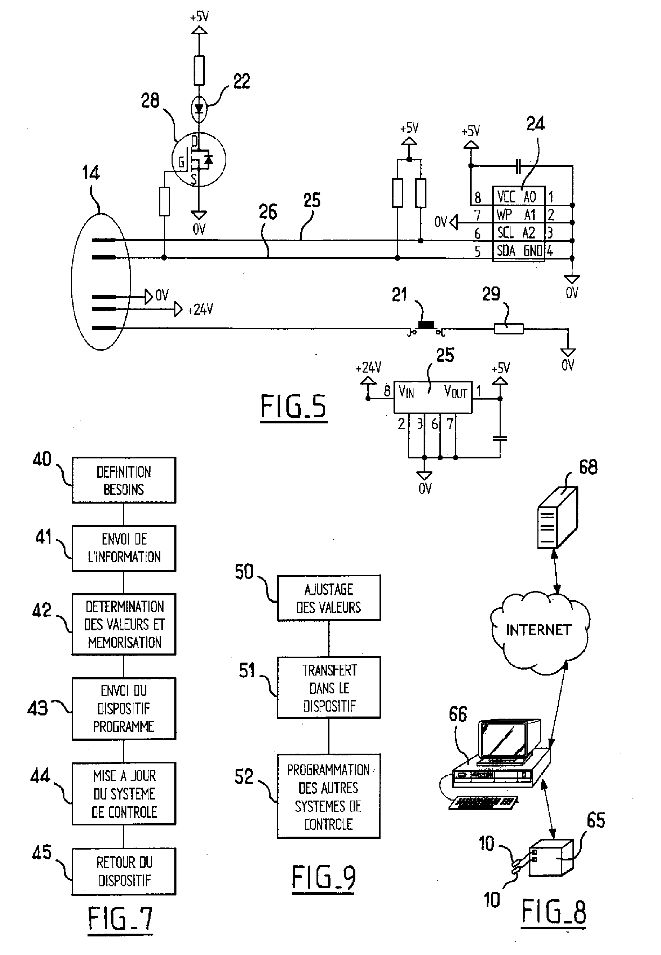

Le dispositif de transfert de données 10 peut être agencé pour être mis en oeuvre dans un procédé où, comme illustré à la figure 7, dans une première étape 40, un utilisateur disposant de la machine tournante électrique 1 et du système de contrôle 2 associé définit des besoins en termes de régimes de fonctionnement de la machine tournante 1, puis les adresse dans une deuxième étape 41 au fabricant ou au distributeur du système de contrôle et de la machine tournante, par exemple. Ces besoins peuvent par exemple être adressés par courrier électronique.

Le distributeur ou le fabricant détermine les valeurs à programmer dans le système de contrôle 2 et les mémorise à l'étape 42 dans le circuit intégré 24, puis le dispositif 10 est adressé à l'étape 43 à l'utilisateur. Celui-ci n'a qu'à raccorder le dispositif 10 au système de contrôle 2 à l'étape 44 puis à presser dans l'exemple considéré deux fois de suite sur la touche 20 avec par exemple une seconde environ d'écart entre chaque pression pour que les données de réglage contenues dans la mémoire du dispositif 10 soient transférées dans le système de contrôle 2 et mémorisées par celui-ci.

Dans l'exemple considéré, lors du transfert des données, le voyant 22 clignote et une fois le transfert effectué, il reste continûment allumé.

Une fois le transfert effectué, l'utilisateur peut retirer le dispositif 10 et le système de contrôle 2 est prêt à fonctionner avec la nouvelle programmation correspondant aux données venant d'être chargées.

Le cas échéant, à l'étape 45, l'utilisateur peut retourner le dispositif 10 au fabricant ou au distributeur.

Le système de contrôle 2 peut être agencé de manière qu'une fois le transfert des données contenues dans le dispositif 10 effectué, des informations liées par exemple à la maintenance de la machine tournante électrique 1 ou du système de contrôle 2 soient mémorisées dans le dispositif 10. Il peut s'agir par exemple du nombre d'heures d'utilisation. Ces informations peuvent être utiles par exemple pour permettre au fabricant ou au distributeur d'avertir l'utilisateur lorsqu'une opération de maintenance doit être effectuée, afm de prévenir un dysfonctionnement ou encore optimiser le fonctionnement en modifiant à nouveau certains paramètres.

Pour un utilisateur ou un distributeur disposant déjà du dispositif de transfert de données 10, la programmation de celui-ci peut s'effectuer à distance avec une interface 65, comme illustré à la figure 8.

L'interface 65 est par exemple reliée à un ordinateur 66 connecté au réseau Internet.

Les données nécessaires à la programmation du dispositif de transfert de données 10 peuvent être transmises depuis le serveur 68 d'un site Internet, exploité par exemple par le fabriquant du système de contrôle 2.

L'interface 65 peut échanger des données avec l'ordinateur 66 selon un premier protocole, par exemple RS 232, et être configurée pour échanger des données avec le ou les dispositifs de transferts de données 10 qui y sont connectés selon un deuxième protocole, différent du premier, par exemple I²C.

L'interface 65 peut encore être utilisée uniquement avec l'ordinateur 66 et les données de programmation du dispositif de transfert 10 correspondre à des informations entrées au clavier de l'ordinateur.

Le logiciel servant à la programmation des données peut demander à l'utilisateur la catégorie de machine tournante et/ou de système de contrôle concerné et mémoriser automatiquement dans le dispositif de transfert de données 10 un code d'identification spécifique qui devra être reconnu par le système de contrôle avant toute modification de la programmation de celui-ci.

Ainsi, préalablement à toute modification de sa programmation, le système de contrôle 2 peut vérifier qu'un code d'identification prédéfini est contenu dans la mémoire du dispositif 10, afin de ne permettre le transfert de données du dispositif 10 vers le système de contrôle 2 qu'après vérification que ce code est acceptable. Cela peut permettre par exemple d'éviter le chargement de données inadaptées au système de contrôle 2, par exemple suite à une erreur humaine si un dispositif 10 était utilisé à la place d'un autre.

Le dispositif 10 peut encore être utilisé pour dupliquer des valeurs de paramètres de fonctionnement d'un système de contrôle 2 vers un autre système de contrôle 2, comme illustré à la figure 9.

Dans une première étape 50, l'utilisateur ajuste les valeurs de certains paramètres d'un premier système de contrôle 2, en utilisant par exemple une console de réglage ou un ordinateur, afin de faire fonctionner de manière optimale la machine électrique 1 associée.

Ensuite, l'utilisateur peut transférer à l'étape 51 les données correspondant aux paramètres ainsi déterminés dans le dispositif 10 puis programmer dans une étape ultérieure 52 d'autres systèmes de contrôle 2 avec les mêmes paramètres, en utilisant le dispositif 10 à chaque fois.

Bien entendu, l'invention n'est pas limitée à l'exemple de réalisation qui vient d'être décrit.

On peut notamment réaliser l'organe de commande différemment et par exemple réaliser l'échange de données entre le dispositif 10 et le système de contrôle 2 autrement que par une liaison filaire, par exemple par une liaison infrarouge. L'utilisation d'une liaison filaire est néanmoins préférable car elle permet l'alimentation électrique du dispositif 10 par celle du système de contrôle 2.

Le système de contrôle 2 peut être modifié de manière à présenter le connecteur 8 en façade, comme illustré en traits discontinus à la figure 1, de sorte qu'un utilisateur peut connecter le dispositif de transfert de données 10 au système de contrôle 2 sans avoir à démonter celui-ci.

L'action à exercer sur l'organe de commande pour provoquer le transfert de données pourrait être autre qu'une double pression, par exemple une pression prolongée d'une durée supérieure à 1 s par exemple. Le dispositif 10 pourrait encore être réalisé sans câble souple entre le boîtier et l'élément de connexion au système de contrôle, le connecteur 14 étant par exemple directement porté par le circuit imprimé 12.

Dans toute la description, y compris les revendications, l'expression « comportant un » doit être comprise comme étant synonyme de « comportant au moins un », sauf si le contraire est spécifié.

## Revendications

1. Dispositif de mise à jour de la programmation d'un système de contrôle (2) d'une machine électrique tournante (1), notamment un variateur de vitesse ou un démarreur, ce dispositif étant dépourvu d'écran et comportant :
- un élément de connexion (13, 14) électrique ou optique au système de contrôle (2), permettant le transfert de données entre le dispositif (10) et le système de contrôle (2),
- une mémoire (14) pour contenir des données à transférer dans le système de contrôle et/ou à charger depuis le système de contrôle,
- un organe de commande (20),
l'échange de données entre le dispositif et le système de contrôle s'effectuant en réponse à une action exercée manuellement sur l'organe de commande.

2. Dispositif selon la revendication 1, **caractérisé par le fait que** l'organe de commande comporte une touche (20).

3. Dispositif selon la revendication 2, **caractérisé par le fait que** la touche (20) est unique.

4. Dispositif selon l'une des revendications 2 et 3, **caractérisé par le fait que** la touche comporte un bouton-poussoir (21).

5. Dispositif selon l'une quelconque des revendications 1 à 4, **caractérisé par le fait qu'**il comporte une diode électroluminescente (22) et **par le fait que** celle-ci s'illumine en fonction de l'état d'accomplissement du transfert de données.

6. Dispositif selon la revendication précédente, **caractérisé par le fait que** la diode électroluminescente (22) clignote pendant le transfert et s'illumine de manière continue après le transfert.

7. Dispositif selon la revendication 1, **caractérisé par le fait que** l'action exercée manuellement sur l'organe de commande comporte deux pressions sur une touche unique (20) avec un intervalle de temps prédéfini entre elles.

8. Dispositif selon la revendication précédente, **caractérisé par le fait que** l'intervalle de temps est compris entre 0,5 seconde et 10 secondes.

9. Dispositif selon l'une quelconque des revendications précédentes, **caractérisé par le fait qu'**il est agencé pour transférer des données vers le système de contrôle (2).

10. Dispositif selon la revendication précédente, **caractérisé par le fait que** les données sont relatives à des paramètres de fonctionnement de la machine et/ou à des caractéristiques de la machine.

11. Dispositif selon l'une quelconque des revendications 1 à 10, **caractérisé par le fait que** l'élément de connexion comporte un connecteur électrique (14).

12. Dispositif selon la revendication 11, **caractérisé par le fait que** le connecteur (14) comporte cinq broches utiles.

13. Dispositif selon l'une quelconque des revendications 1 à 12, **caractérisé par le fait que** la mémoire est contenue dans un circuit intégré (14) EEPROM.

14. Dispositif selon l'une quelconque des revendications 1 à 13, **caractérisé par le fait qu'**il comporte un boîtier (11) ouvert sur une face.

15. Dispositif selon la revendication précédente, **caractérisé par le fait que** le boîtier (11) comporte un plot (16) venu de moulage, sur lequel est engagé un circuit imprimé (12).

16. Dispositif selon la revendication 11, **caractérisé par le fait qu'**il comporte un câble souple (13) entre le connecteur (14) et un boîtier (11).

17. Dispositif selon l'une quelconque des revendications 1 à 16, **caractérisé par le fait que** la mémoire présente une capacité supérieure ou égale à 8 MOctets, notamment supérieure ou égale à 16 MOctets.

18. Ensemble comportant un dispositif (10) et un système de contrôle (2) tels que définis dans l'une quelconque des revendications précédentes.

19. Ensemble selon la revendication précédente, **caractérisé par le fait que** les données contenues dans la mémoire comportent un code d'identification spécifique à une catégorie prédéfinie de machine tournante et/ou de système de contrôle et **par le fait que** le système de contrôle est agencé pour empêcher le transfert des données si le code n'est pas reconnu.

20. Ensemble selon l'une des revendications 18 et 19, **caractérisé par le fait que** le système de contrôle (2) est agencé pour modifier des données contenues dans la mémoire du dispositif (10) après l'opération de transfert des données.

21. Ensemble selon l'une quelconque des revendications 18 à 20, **caractérisé par le fait que** le système de contrôle est agencé pour lire un état de l'organe de commande (20).

22. Ensemble selon l'une quelconque des revendications 18 à 21, **caractérisé par le fait que** le dispositif est dépourvu d'alimentation électrique propre et **par le fait que** le système de contrôle est agencé pour alimenter électriquement le dispositif.

23. Ensemble selon l'une quelconque des revendications 18 à 22, **caractérisé par le fait que** le dispositif est agencé pour communiquer avec le système de contrôle selon le protocole I²C.

24. Ensemble selon l'une quelconque des revendications 18 à 23, **caractérisé par le fait que** le système de contrôle comporte un connecteur (8) pour recevoir l'élément de connexion.

25. Ensemble selon la revendication précédente, **caractérisé par le fait que** le connecteur est accessible sans démontage d'un capot de protection.

26. Ensemble selon l'une quelconque des revendications 18 à 25, **caractérisé par le fait que** le connecteur comporte des broches permettant l'échange de données selon un second protocole différent du protocole servant à l'échange de données entre le dispositif (10) et le système de contrôle (2).

27. Ensemble selon l'une quelconque des revendications 18 à 26, **caractérisé par le fait que** le système de contrôle (2) est agencé pour agir sur la vitesse de rotation d'un moteur électrique (1), au moins lors de la phase de démarrage.

28. Ensemble selon l'une quelconque des revendications 18 à 24, **caractérisé par le fait que** le système de contrôle (2) est dépourvu d'écran, notamment d'écran à cristaux liquides ou à afficheurs à au moins sept segments.

29. Ensemble selon l'une quelconque des revendications 18 à 28, **caractérisé par le fait que** le système de contrôle (2) est dépourvu de clavier.

30. Ensemble selon l'une quelconque des revendications 18 à 29, **caractérisé par le fait que** le système de contrôle (2) est solidaire de la machine électrique (1).

31. Ensemble selon l'une quelconque des revendications 18 à 30, **caractérisé par le fait que** le système de contrôle comporte une mémoire (60) contenant les données nécessaires au fonctionnement de la machine tournante.

32. Gamme de systèmes de contrôle de machines électriques tournantes comportant des systèmes de contrôle de fabrication sensiblement identiques et un ensemble de dispositifs (10) tels que définis dans la revendication 1, associés à ces systèmes de contrôle et contenant des données de fonctionnement différentes.

33. Procédé industriel dans lequel des machines électriques tournantes sont contrôlées par des systèmes de contrôle respectifs, procédé dans lequel les paramètres de fonctionnement des machines sont déterminés, transférés dans un dispositif (10) tel que défini à la revendication 1, puis transférés vers un système de contrôle associé à une autre machine tournante.

34. Procédé de mise à jour d'au moins un paramètre de fonctionnement d'un système de contrôle (2) d'au moins une machine tournante électrique (1), dans lequel des données liées à ce paramètre sont chargées dans la mémoire d'un dispositif (10) de transfert de données puis les données ainsi chargées sont transférées dans le système de contrôle (2), le dispositif (10) comportant :
- un élément de connexion (13, 14) électrique ou optique au système de contrôle (2), permettant le transfert de données entre le dispositif (10) et le système de contrôle (2),
- une mémoire (14) pour contenir des données à transférer dans le système de contrôle et/ou à charger depuis le système de contrôle,
- un organe de commande (20),
procédé dans lequel l'échange de données entre le dispositif (10) et le système de contrôle (2) s'effectue en réponse à une action exercée manuellement sur l'organe de commande.

35. Procédé selon la revendication précédente, **caractérisé par le fait qu'**après le transfert des données, des données liées au fonctionnement de la machine sont chargées dans le dispositif (10).

36. Procédé selon la revendication 35, **caractérisé par le fait que** les données liées au fonctionnement comportent au moins une information utile à la maintenance.

37. Procédé selon la revendication 34, **caractérisé par le fait que** les données chargées dans la mémoire du dispositif sont téléchargées depuis un site Internet (68).

38. Procédé selon la revendication 34, **caractérisé par le fait que** le chargement s'effectue par l'intermédiaire d'une interface (65) permettant la réception de données selon un premier protocole et leur transfert vers le dispositif selon un second protocole.

39. Procédé selon la revendication 34, **caractérisé par le fait que** les données sont chargées dans le dispositif (10) après sélection d'une catégorie de système de contrôle parmi plusieurs et **par le fait que** les données chargées comportent un code d'identification spécifique à chaque catégorie de système de contrôle.
